# EUROPEAN PATENT APPLICATION

(11) **EP 4 611 051 A1**
(43) Date of publication of application: **03.09.2025**
(21) Application number: 23882415.5
(22) Date of filing: 11.10.2023
(51) Int. Cl.: H01M 4/13, H01M 4/133, H01M 4/134, H01M 4/136, H01M 4/36, H01M 4/38, H01M 4/58, H01M 4/587, H01M 4/62

(54) **NEGATIVE ELECTRODE FOR SECONDARY BATTERY, AND SECONDARY BATTERY**

(30) Priority: 25.10.2022 JP 2022170929
(71) Applicant: Panasonic Intellectual Property Management Co., Ltd., Kadoma-shi, Osaka 571-0057 (JP)
(72) Inventor: HASEGAWA, Masaki, Kadoma-shi, Osaka 571-0057 (JP); SAKATA, Motohiro, Kadoma-shi, Osaka 571-0057 (JP)
(74) Representative: Eisenführ Speiser
(86) International application number: PCT/JP2023/036845
(87) International publication number: WO 2024/090206

(57) **Abstract**

**In** the present invention, a negative electrode (12) for a secondary battery is characterized by comprising a negative electrode current collector (40) and a negative electrode mixture layer (42) provided on the negative electrode current collector (40), and is characterized in that: the negative electrode mixture layer (42) has a negative electrode active substance and a dicarboxylic acid component that includes a dicarboxylic acid and/or an anhydride thereof; and if the negative electrode mixture layer (42) is divided into two equal parts in the thickness direction to form a lower half region (42a) on the negative electrode current collector (40) side and an upper half region (42b) on the surface side, the content (C_{A}) of the dicarboxylic acid component in the lower half region (42a) and the content (C_{B}) of the dicarboxylic acid component in the upper half region (42b) satisfy the relationship C_{A}>C_{B}.

## Description

### TECHNICAL FIELD

The present disclosure relates to a negative electrode for secondary batteries and to a secondary battery.

### BACKGROUND

In recent years, as a secondary battery having a high output and a high energy density, a secondary battery has been widely used, in which the non-aqueous electrolyte secondary battery includes a positive electrode, a negative electrode, and a non-aqueous electrolyte, and performs charging and discharging by moving lithium ions and the like between the positive electrode and the negative electrode.

For example, Patent Literatures 1 and 2 disclose a negative electrode for secondary batteries in which a negative electrode mixture layer containing a negative electrode active material and a dicarboxylic acid is disposed on a negative electrode current collector.

In addition, for example, Patent Literature 3 discloses a negative electrode active material which includes particles composed of a silicon oxide represented by SiOx (0.3 ≤ x ≤ 1.6) and a resin film covering the surfaces of the particles and in which the resin film is a copolymer of acrylic acid and an acid monomer such as methacrylic acid, itaconic acid, fumaric acid or maleic acid.

For example, Patent Literature 4 discloses a method for producing a negative electrode composition, including the step of suspending an electrode active material, a binder and an electron conductivity generator in an aqueous medium, in which the aqueous medium is an unbuffered acidic medium having a pH of 1 or a buffered acidic medium having a pH of 4 or less and obtained by adding a strong base and an organic acid, and fumaric acid is used as the organic acid.

### CITATION LIST

### PATENT LITERATURE

Patent Literature 1: JP 2011-249058 A
Patent Literature 2: JP 2004-335379 A
Patent Literature 3: JP 2012-164624 A
Patent Literature 4: JP 2012-516531 A

### SUMMARY

The present inventors have extensively conducted studies, and resultantly found that when the negative electrode mixture layer contains a dicarboxylic acid such as fumaric acid, interface resistance between the negative electrode mixture layer and the negative electrode current collector tends to decrease. However, it has also been found that a negative electrode for secondary batteries in which a dicarboxylic acid is contained in the negative electrode mixture layer has a problem that the binding force (adhesive strength) between particles of the negative electrode active material in the negative electrode mixture layer decreases. If the binding force (adhesive strength) between particles of the negative electrode active material in the negative electrode mixture layer decreases, an increased number of particles of the negative electrode active material may be isolated from the conductive path.

Accordingly, an object of the present disclosure is to provide a negative electrode for secondary batteries which is capable of reducing interface resistance between a negative electrode mixture layer and a negative electrode current collector and suppressing a decrease in binding force (adhesive strength) between particles of a negative electrode active material in the negative electrode mixture layer, and a secondary battery including the negative electrode for secondary batteries.

A negative electrode for secondary batteries according to an aspect of the present disclosure includes a negative electrode current collector and a negative electrode mixture layer provided on the negative electrode current collector, in which the negative electrode mixture layer contains a negative electrode active material, and a dicarboxylic acid component containing at least one of a dicarboxylic acid and an anhydride thereof, and when the negative electrode mixture layer is divided in a thickness direction into two equal parts, one of which is a lower half region on a side of the negative electrode current collector and the other of which is an upper half region on a surface side, a content of the dicarboxylic acid component in the lower half region (C_{A}) and a content of the dicarboxylic acid component in the upper half region (C_{B}) satisfy a relationship of C_{A} > C_{B}.

A secondary battery according to one aspect of the present disclosure includes the negative electrode for secondary batteries.

According to an aspect of the present disclosure, it is possible to provide a negative electrode for secondary batteries which is capable of reducing interface resistance between a negative electrode mixture layer and a negative electrode current collector and suppressing a decrease in binding force (adhesive strength) between particles of a negative electrode active material in the negative electrode mixture layer, and a secondary battery including the negative electrode for secondary batteries.

### BRIEF DESCRIPTION OF DRAWINGS

FIG. 1 is a sectional view of a secondary battery according to an example of an embodiment.
FIG. 2 is a cross-sectional view of a negative electrode as an example of an embodiment.

### DESCRIPTION OF EMBODIMENTS

A negative electrode for secondary batteries according to an aspect of the present disclosure includes a negative electrode current collector and a negative electrode mixture layer provided on the negative electrode current collector, in which the negative electrode mixture layer contains a negative electrode active material, and a dicarboxylic acid component containing at least one of a dicarboxylic acid and an anhydride thereof, and when the negative electrode mixture layer is divided in a thickness direction into two equal parts, one of which is a lower half region on a side of the negative electrode current collector and the other of which is an upper half region on a surface side, a content of the dicarboxylic acid component in the lower half region (C_{A}) and a content of the dicarboxylic acid component in the upper half region (C_{B}) satisfy a relationship of C_{A} > C_{B}. A negative electrode for secondary batteries according to an aspect of the present disclosure is capable of reducing interface resistance between a negative electrode mixture layer and a negative electrode current collector and suppressing a decrease in binding force (adhesive strength) between particles of a negative electrode active material in the negative electrode mixture layer. Although the mechanism that exerts the above effects is not clear, the following is conceivable.

**A film derived** from a dicarboxylic acid may be formed on the surface of the negative electrode active material. For example, a functional group on the surface of the negative electrode active material and a carboxyl group of the dicarboxylic acid are chemically bonded, so that a carboxylic acid is adsorbed to the negative electrode active material to form a film. For example, when the functional group on the surface of the negative electrode active material is a hydroxyl group, it forms a hydrogen bond with a carboxyl group. The dicarboxylic acid-derived film formed on the surface of the negative electrode active material may improve the electron conductivity of the negative electrode active material, leading to a decrease in interface resistance between the negative electrode mixture layer and the negative electrode current collector. The dicarboxylic acid-derived film may also be formed on the surface of the negative electrode current collector. For example, when the negative electrode current collector is a Cu-based negative electrode current collector such as a Cu foil, Cu and a carboxyl group react to form a dicarboxylic acid-derived film on the surface of the negative electrode current collector. The formation of the dicarboxylic acid-derived film on the surface of the negative electrode current collector may, for example, break the oxide film of the negative electrode current collector to improve the electron conductivity of the negative electrode current collector, leading to a decrease in interface resistance between the negative electrode mixture layer and the negative electrode current collector.

When the content of the dicarboxylic acid component in the lower half region (C_{A}) and the content of the dicarboxylic acid component in the upper half region (C_{B}) satisfy the relationship of C_{A} > C_{B}, the interface resistance between the negative electrode mixture layer and the negative electrode current collector can be reduced with a smaller content of the dicarboxylic acid component as compared to a case where the dicarboxylic acid component is evenly distributed in the negative electrode mixture layer (C_{A} = C_{B}). The reduction of the content of the dicarboxylic acid component in the negative electrode mixture layer may lead to suppression of a decrease in binding force (adhesive strength) between the particles of the negative electrode active material in the negative electrode mixture layer.

Further, when an unsaturated dicarboxylic acid is used as the dicarboxylic acid, contribution of the π electron cloud of the carbon-carbon double bond moiety may lead to a more significant decrease in interface resistance between the negative electrode mixture layer and the negative electrode current collector. In addition, a combination of an unsaturated dicarboxylic acid and a Cu-based negative electrode current collector may be preferable from the viewpoint of reducing the interface resistance between the negative electrode mixture layer and the negative electrode current collector. This combination also enables reduction of the content of the dicarboxylic acid component in the negative electrode mixture layer, so that it is possible to further enhance the effect of suppressing a decrease in binding force (adhesive strength) between the particles of the negative electrode active material in the negative electrode mixture layer.

Hereinafter, an example of an embodiment will be described in detail with reference to the drawings. Note that a secondary battery of the present disclosure is not limited to the embodiments described below. In addition, the drawings referred to in the Description of Embodiments are schematically illustrated.

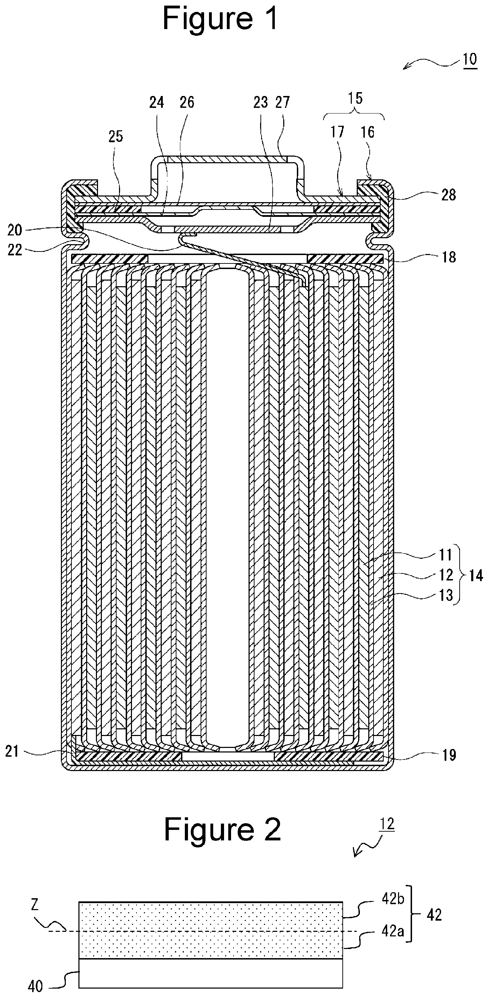

FIG. 1 is a sectional view of a secondary battery according to an example of an embodiment. The secondary battery 10 shown in FIG. 1 includes a wound electrode assembly 14 in which a positive electrode 11 and a negative electrode 12 are wound with a separator 13 interposed therebetween, a non-aqueous electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, and the like, and resin cases (so-called laminated type) formed by laminating a resin sheet.

The non-aqueous electrolyte is, for example, an electrolyte having lithium ion conductivity, and may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. The non-aqueous electrolyte is an example, and may be an aqueous electrolyte as long as it is applicable.

The case body 16 is, for example, a cylindrical metal container with a bottom. A gasket 28 is provided between the case body 16 and the sealing assembly 17 to ensure airtightness within the battery. The case body 16 has a projecting portion 22 in which, for example, a part of a side surface portion of the case body 16 projects inward to support the sealing assembly 17. The projecting portion 22 is preferably formed in an annular shape in the circumferential direction of the case body 16, and supports the sealing assembly 17 on the upper surface of the projecting portion.

The sealing assembly 17 has a structure in which a filter 23, a lower vent member 24, an insulating member 25, an upper vent member 26, and a cap 27 are stacked sequentially from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus a current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 serves as a negative electrode terminal.

Hereinafter, the positive electrode 11, the negative electrode 12, and the separator 13 will be described in detail.

### [Negative Electrode]

FIG. 2 is a cross-sectional view of a negative electrode as an example of an embodiment. The negative electrode 12 includes a negative electrode current collector 40 and a negative electrode mixture layer 42 provided on the negative electrode current collector 40. The negative electrode mixture layer 42 may be provided on one surface of the negative electrode current collector 40, or may be provided on both surfaces of the negative electrode current collector 40.

Examples of the negative electrode current collector 40 include a foil of a metal stable in a potential range of the negative electrode, such as copper, and a film in which the metal is disposed on a surface layer.

The negative electrode mixture layer 42 contains a negative electrode active material, and a dicarboxylic acid component containing at least one of a dicarboxylic acid and an anhydride thereof. Hereinafter, at least one of a dicarboxylic acid and an anhydride thereof may be referred to as a dicarboxylic acid and/or an anhydride thereof. The negative electrode mixture layer 42 preferably contains a binder material, an **electrically** conductive agent, and the like. The negative electrode 12 can be manufactured by preparing a dicarboxylic acid component, a negative electrode mixture slurry containing a negative electrode active material, a binder, and the like, applying the negative electrode mixture slurry onto the negative electrode current collector 40, performing drying to form the negative electrode mixture layer 42, and rolling the negative electrode mixture layer 42. A method of manufacturing the negative electrode mixture layer 42 will be described in detail.

**In** the present embodiment, when the negative electrode mixture layer 42 shown in FIG. 2 is divided in a thickness direction into two equal parts, one of which is a lower half region 42a on the negative electrode current collector 40 side and the other of which is an upper half region 42b on the surface side, the content of the dicarboxylic acid component in the lower half region 42a (C_{A}) and the content of the dicarboxylic acid component in the upper half region 42b (C_{B}) satisfy the relationship of C_{A} > C_{B}. By satisfying the relationship of C_{A} > C_{B}, interface resistance between the negative electrode mixture layer 42 and the negative electrode current collector 40 can be reduced and a decrease in binding force (adhesive strength) between particles of the negative electrode active material in the negative electrode mixture layer 42 can be suppressed as described above. The phrase "the negative electrode mixture layer 42 is divided in a thickness direction into two equal parts" means that when a lamination direction of the negative electrode current collector 40 and the negative electrode mixture layer 42 is defined as the thickness direction of the negative electrode mixture layer 42, the negative electrode mixture layer 42 is divided in half at the middle Z of a thickness of the negative electrode mixture layer 42. Then, when the negative electrode mixture layer 42 is divided in the thickness direction into two equal parts, the negative electrode mixture layer 42 positioned near the negative electrode current collector 40 is defined as a lower half region 42a, and the negative electrode mixture layer 42 positioned far from the negative electrode current collector 40 is defined as the upper half region 42b. In addition, the content of the dicarboxylic acid component in the lower half region 42a (C_{A}) is a ratio (mass%) of the mass of the dicarboxylic acid component contained in the lower half region 42a to the mass of the lower half region 42a. **In** addition, the content of the dicarboxylic acid component in the upper half region 42b (C_{B}) is a ratio (mass%) of the mass of the dicarboxylic acid component contained in the upper half region 42b to the mass of the upper half region 42b.

From the viewpoint of, for example, further reducing interface resistance between the negative electrode mixture layer 42 and the negative electrode current collector 40 or further suppressing a decrease in binding force (adhesive strength) between the particles of the negative electrode active material in the negative electrode mixture layer 42, the ratio of the content of the dicarboxylic acid component in the upper half region (C_{B}) to the content of the dicarboxylic acid component in the lower half region 42a (C_{A}) (C_{B}/C_{A}) is preferably greater than or equal to 0 and less than or equal to 0.7, more preferably greater than or equal to 0 and less than or equal to 0.5, and more preferably greater than or equal to 0 and less than or equal to 0.3.

From the viewpoint of, for example, further reducing interface resistance between the negative electrode mixture layer 42 and the negative electrode current collector 40 or further suppressing a decrease in binding force (adhesive strength) between the particles of the negative electrode active material in the negative electrode mixture layer 42, the content of the dicarboxylic acid component in the lower half region 42a (C_{A}) is preferably greater than or equal to 0.1 mass% and less than or equal to 2 mass%, and more preferably greater than or equal to 0.4 mass% and less than or equal to 1.5 mass%. In addition, from the viewpoint of, for example, further reducing interface resistance between the negative electrode mixture layer 42 and the negative electrode current collector 40 or further suppressing a decrease in binding force (adhesive strength) between the particles of the negative electrode active material in the negative electrode mixture layer 42, the content of the dicarboxylic acid component in the upper half region (C_{B}) is preferably greater than or equal to 0 mass% and less than or equal to 1.4 mass%.

Examples of the dicarboxylic acid and/or anhydride thereof include aliphatic dicarboxylic acids and/or anhydrides thereof, and aromatic dicarboxylic acids and/or anhydrides thereof. Examples of the aliphatic dicarboxylic acid and/or anhydride thereof include saturated dicarboxylic acids and/or anhydrides thereof, and unsaturated dicarboxylic acids and/or anhydrides thereof. These may be used singly or in combination of two or more thereof. Of these, unsaturated dicarboxylic acids and/or anhydrides thereof are preferable from the viewpoint of, for example, further reducing the interface resistance between the negative electrode mixture layer 42 and the negative electrode current collector 40.

Examples of the unsaturated dicarboxylic acid include fumaric acid, maleic acid, itaconic acid, mesaconic acid, methylenesuccinic acid, citraconic acid, glutaconic acid, tetrahydrophthalic acid, 2-allylmalonic acid, and isopropylidenesuccinic acid. Of these, fumaric acid, mesaconic acid and methylenesuccinic acid are preferable from the viewpoint of, for example, further reducing the interface resistance between the negative electrode mixture layer 42 and the negative electrode current collector 40. In addition, these may be used singly or in combination of two or more thereof.

A method for calculating the content of the dicarboxylic acid component from the produced negative electrode 12 will be described. First, the negative electrode mixture layer 42 of the upper half region 42b is taken by scraping, and the sample taken by scraping is put into an alcohol solution to elute the dicarboxylic acid component contained in the sample. The dicarboxylic acid component contained in the negative electrode mixture layer 42 may be bonded to lithium or the like, thus being present in the form of a dicarboxylic acid salt. In this case, it is desirable to replace the alcohol solution with pure water. The dicarboxylic acid component is quantitated by performing GCMS measurement on the solution in which the dicarboxylic acid component is eluted, and the content of the dicarboxylic acid component in the upper half region 42b (C_{B}) is calculated. In addition, the negative electrode mixture layer 42 of the lower half region 42a is taken by scraping, and the same procedure as described above is carried out to calculate the content of the dicarboxylic acid component in the lower half region 42a (C_{A}).

The negative electrode active material is, for example, a material that is capable of reversibly occluding and releasing lithium ions, and specific examples thereof include carbon materials, metals capable of forming an alloy with lithium, and alloys containing any of the metals, and compounds containing any of the metals. Examples of the carbon material include graphite materials such as natural graphite and artificial graphite. Examples of the metal capable of forming an alloy with lithium, the alloy containing the metal, or the compound containing the metal include known materials such as Si-containing materials, Sn-containing materials, and Ti-containing materials. The negative electrode active material preferably contains a graphite material and a Si-containing material from the viewpoint of, for example, an increased capacity of the battery, and charge/discharge cycle characteristics.

Examples of the Si-containing material include Si, Si alloys, and Si compounds. In addition, the Si-containing material may be, for example, composite particles containing an ion conducting phase and silicon phases (silicon particles as an example) dispersed in the ion conducting phase. The ion conducting phase is a phase that conducts ions, and examples thereof include a silicate phase, a carbon phase, and a silicon oxide phase. From the viewpoint of, for example, charge-discharge characteristics, the Si-containing material preferably contains first composite particles having a carbon phase and silicon phases dispersed in the carbon phase, second composite particles having a silicate phase and silicon phases dispersed in the silicate phase, and/or third composite particles having a silicon oxide phase and silicon phases dispersed in the silicon oxide phase.

The carbon phase may be composed of, for example, non-crystalline carbon (amorphous carbon). Examples of the non-crystalline carbon forming the carbon layer include hard carbon, soft carbon, and other non-crystalline carbon. The non-crystalline carbon is a carbon material in which the average spacing d₀₀₂ of (002) plane is more than 0.34 nm as measured by an X-ray diffraction method.

The main component (for example, greater than or equal to 95 mass%, or greater than or equal to 100 mass%) of the silicon oxide phase may be silicon dioxide. The composition of the composite particle including a silicon oxide phase and silicon phases dispersed therein can be represented by SiOₓ as a whole. SiOₓ has a structure in which silicon fine particles are dispersed in amorphous SiO₂. The content ratio of oxygen to silicon, x, is, for example, preferably 0.5 ≤ x < 2.0, and more preferably 0.8 ≤ x ≤ 1.5.

The silicate phase may satisfy the following conditions (1) and/or (2).
(1) The silicate phase contains at least one selected from the group consisting of alkali metal elements and Group 2 elements (Group 2 elements of the long-period periodic table).
(2) The silicate phase contains an element L. The element L is at least one selected from the group consisting of B, Al, Zr, Nb, Ta, V, lanthanoid, Y, Ti, P, Bi, Zn, Sn, Pb, Sb, Co, Er, F and W. The lanthanoid is a generic term for 15 elements beginning with lanthanum (La) of atomic number 57 and ending with lutetium (Lu) of atomic number 71.

With respect to the condition (1), examples of the alkali metal element include lithium (Li), potassium (K), and sodium (Na). Examples of the Group 2 element include magnesium (Mg), calcium (Ca), strontium (Sr), and barium (Ba). Inclusion of the alkali metal element and/or the Group 2 element may reduce the irreversible capacity of the silicate phase. The silicate phase containing lithium (hereinafter, sometimes referred to as a "lithium silicate phase" is preferable from the viewpoint of, for example, having a small irreversible capacity and high initial charge/discharge efficiency.

The lithium silicate phase is only required to be an oxide phase containing Li, Si and O, and may contain other elements. The atomic ratio of O to Si: O/Si in the lithium silicate phase is, for example, greater than 2 and less than 4. Preferably, O/Si is greater than 2 and less than 3. The atomic ratio of Li to Si: Li/Si in the lithium silicate phase is, for example, greater than 0 and less than 4.

The lithium silicate phase may include a lithium silicate phase represented by the formula: Li_{2z}SiO_{(2+z)} (0 < z < 2), or may be composed of the lithium silicate phase. Preferably, z satisfies the relationship of 0 < z < 1. More preferably z = 1/2 (that is, Li₂Si₂O₅).

The Si-containing material may contain composite particles containing an ion conducting phase and silicon phases dispersed in the ion conducting phase, and a coating layer covering at least a part of the surfaces of the composite particles.

The coating layer present on the surfaces of the composite particles includes, for example, a conductive layer. Formation of the conductive layer on the surfaces of the composite particles may enable enhancing the conductivity of the Si-containing material. The conductive material forming the conductive layer is preferably a conductive material containing carbon. Examples of the conductive material containing carbon include conductive carbon materials. Examples of the conductive carbon material include carbon black, graphite, and amorphous carbon having low crystallinity (non-crystalline carbon). Amorphous carbon is preferable from the viewpoint of obtaining a high buffering action on the silicon phase whose volume is changed by charge/discharge. The amorphous carbon may be easily graphitizable carbon (soft carbon) or hardly graphitizable carbon (hard carbon). Examples of the carbon black include acetylene black, and Ketjenblack. The thickness of the conductive layer may be, for example, in the range of 1 to 200 nm. The thickness of the conductive layer can be measured by observing a cross-section of the Si-containing material with a SEM or TEM (transmission electron microscope).

The content of the Si-containing material is preferably greater than or equal to 1 mass% and less than or equal to 20 mass%, and more preferably greater than or equal to 5 mass% and less than or equal to 15 mass% based on the total mass of the negative electrode active material from the viewpoint of, for example, an enhanced capacity of batteries or charge/discharge characteristics.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or salts thereof, polyacrylic acid (PAA) or salts thereof (PAA-Na, PAA-K, and the like, and partially neutralized salts may be used), and polyvinyl alcohol (PVA). Among them, one type may be used alone, or two or more types may be used in combination.

Examples of the conductive agent include particles of carbon-based materials such as carbon black (CB), acetylene black (AB), Ketjenblack, carbon nanotubes (CNT), and graphite. Among them, one type may be used alone, or two or more types may be used in combination.

An example of a method of manufacturing the negative electrode mixture layer 42 will be described. For example, a negative electrode active material, a dicarboxylic acid and a binder material are mixed together with a solvent such as water to prepare a negative electrode mixture slurry for the lower half region 42a. In addition, separately from the slurry, a negative electrode active material, a binder, and a dicarboxylic acid if necessary are mixed together with a solvent such as water to prepare a negative electrode mixture slurry for the upper half region 42b. **In** the case where a dicarboxylic acid is added to the negative electrode mixture slurry for the upper half region 42b, the content of the dicarboxylic acid in the slurry is adjusted to be smaller than the content of the dicarboxylic acid in the negative electrode mixture slurry for the lower half region 42a. The negative electrode mixture slurry for the lower half region 42a is applied to both surfaces of the negative electrode current collector 40, and dried, and the negative electrode mixture slurry for the upper half region 42b is then applied onto the film formed from the negative electrode mixture slurry for the lower half region 42a, and dried, whereby the negative electrode mixture layer 42 can be formed. In the above method, the negative electrode mixture slurry for the lower half region 42a is applied, and dried, and the negative electrode mixture slurry for the upper half region 42b is then applied, but the negative electrode mixture slurry for the upper half region 42b may be applied after application of the negative electrode mixture slurry for the lower half region 42a and before drying, or the negative electrode mixture slurry for the lower half region 42a and the negative electrode mixture slurry for the upper half region 42b may be applied in parallel.

It is desirable that the temperature for drying the negative electrode mixture slurry be, for example, lower than a temperature at which the dicarboxylic acid is decomposed and vaporized (for example, sublimated). In the present disclosure, the temperature for drying the negative electrode mixture slurry is not prohibited from being set to a temperature higher than or equal to a temperature at which the dicarboxylic acid is decomposed and vaporized, but in the case where the drying is performed at a temperature higher than or equal to a temperature at which the dicarboxylic acid is decomposed and vaporized, it is necessary to pay attention so that the dicarboxylic acid does not completely disappear from the negative electrode mixture layer 42.

The kneading of the raw materials in preparation of the negative electrode mixture slurry is performed using, for example, a cutter mill, a pin mill, a bead mill, a fine particle composing machine (a device in which a shear force is generated between a specially shaped rotor rotating at a high speed inside a tank and a collision plate), a granulator, and a kneading machine such as a twin-screw extruder or a planetary mixer.

The negative electrode mixture slurry is applied using, for example, a slit die coater, a reverse roll coater, a lip coater, a blade coater, a knife coater, a gravure coater, or a dip coater.

The rolling of the coating film may be performed several times at a predetermined linear pressure, for example, with a roll press machine until the coating film has a predetermined thickness.

### [Positive Electrode]

The positive electrode 11 includes a positive electrode current collector such as a metal foil and a positive electrode mixture layer formed on the positive electrode current collector. As the positive electrode current collector, a foil of a metal, such as aluminum, that is stable in a potential range of the positive electrode, a film in which the metal is disposed on its surface layer, or the like can be used. The positive electrode mixture layer includes, for example, a positive electrode active material, a binding material, and a conductive agent.

The positive electrode 11 can be produced by, for example, applying a positive electrode mixture slurry including a positive electrode active material, a binder, a conductive agent, and the like to the positive electrode current collector, drying the applied slurry to form a positive electrode mixture layer, and then performing a pressing step of pressing the positive electrode mixture layer with a roller or the like.

Examples of the positive electrode active material include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, Li_{X}Co_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or a plurality of kinds of them may be mixed and used. From the viewpoint that a high capacity of the secondary battery can be achieved, it is desirable that the positive electrode active material contains a lithium nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3).

Examples of the conductive agent include particles of carbon-based materials such as carbon black (CB), acetylene black (AB), Ketjenblack, carbon nanotubes (CNT), and graphite. Among them, one type may be used alone, or two or more types may be used in combination.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or salts thereof, polyacrylic acid (PAA) or salts thereof (PAA-Na, PAA-K, and the like, and partially neutralized salts may be used), and polyvinyl alcohol (PVA). Among them, one type may be used alone, or two or more types may be used in combination.

### [Separator]

As the separator 13, for example, a porous sheet having an ion permeation property and an insulation property is used. Specific examples of the porous sheet include a microporous thin film, a woven fabric, and a nonwoven fabric. As a material of the separator 13, olefin-based resins such as polyethylene and polypropylene, cellulose, and the like are preferable. The separator 13 may be a laminate including a cellulose fiber layer and a thermoplastic resin fiber layer such as an olefin-based resin. Further, a multilayer separator including a polyethylene layer and a polypropylene layer may be used, and a separator having a surface coated with a material such as an aramid-based resin or a ceramic may be used.

### EXAMPLES

Hereinafter, the present disclosure will be further described with reference to Examples. However, the present disclosure is not limited to the following Examples.

### <Example>

### [Preparation of Negative Electrode]

90 Parts by mass of graphite particles and 10 parts by mass of a Si-containing material were mixed to obtain a negative electrode active material. 98 Parts by mass of the negative electrode active material, 1 part by mass of carboxymethyl cellulose, 1 part by mass of styrene-butadiene rubber, and 1.46 parts by mass of fumaric acid were mixed, and the mixture was mixed with optional water to prepare a negative electrode mixture slurry for a lower half region. In addition, 98 parts by mass of the negative electrode active material, 1 part by mass of carboxymethyl cellulose, 1 part by mass of styrene-butadiene rubber, and 0.72 parts by mass of fumaric acid were mixed, and the mixture was mixed with optional water to prepare a negative electrode mixture slurry for an upper half region.

The negative electrode mixture slurry for the lower half region was applied to both surfaces of a copper foil, the applied film was dried, the negative electrode mixture slurry for the upper half region was then applied onto the applied film, and dried, and the applied film was rolled by a rolling roller to prepare a negative electrode in which a negative electrode mixture layer was formed on both surfaces of a negative electrode current collector. The thicknesses of the negative electrode mixture slurries applied were set to the same thickness. In addition, the temperature during drying was set to 150°C to suppress sublimation of fumaric acid. Therefore, the content of fumaric acid in the lower half region (C_{A}) is presumed to be the same as the content of fumaric acid in the solid content of the negative electrode mixture slurry for the lower half region, and is 1.46 mass%. In addition, the content of fumaric acid in the upper half region (C_{B}) is presumed to be the same as the content of fumaric acid in the solid content of the negative electrode mixture slurry for the lower half region, and is 0.72 mass%.

### <Comparative Example 1>

98 Parts by mass of the negative electrode active material, 1 part by mass of carboxymethyl cellulose, and 1 part by mass of styrene-butadiene rubber, and the mixture was mixed with optional water to prepare a negative electrode mixture slurry. This negative electrode mixture slurry was applied to both surfaces of a copper foil, and the applied film was dried, and then rolled by a rolling roller to prepare a negative electrode in which a negative electrode mixture layer was formed on both surfaces of a negative electrode current collector. Both the content of fumaric acid in the lower half region (C_{A}) and the content of fumaric acid in the upper half region (C_{B}) in the negative electrode mixture layer are 0 mass%.

### <Comparative Example 2>

A negative electrode was prepared in the same manner as in Example except that the negative electrode mixture slurry used in Comparative Example 1 was used as a negative electrode mixture slurry for the lower half region, and the amount of fumaric acid added was 0.75 parts by mass in the preparation of the negative electrode mixture slurry for the upper half region. Therefore, the content of fumaric acid in the lower half region (C_{A}) is 0% by mass, and the content of fumaric acid in the upper half region (C_{B}) is 0.75% by mass.

### <Comparative Example 3>

98 Parts by mass of the negative electrode active material, 1 part by mass of carboxymethyl cellulose, 1 part by mass of styrene-butadiene rubber, and 1.57 parts by mass of fumaric acid were mixed, and the mixture was mixed with optional water to prepare a negative electrode mixture slurry. This negative electrode mixture slurry was applied to both surfaces of a copper foil, and the applied film was dried, and then rolled by a rolling roller to prepare a negative electrode in which a negative electrode mixture layer was formed on both surfaces of a negative electrode current collector. The temperature during drying was set to 150°C to suppress sublimation of fumaric acid. Therefore, both the content of fumaric acid in the lower half region (C_{A}) and the content of fumaric acid in the upper half region (C_{B}) in the negative electrode mixture layer are 1.57 mass%.

### [Measurement of Interface Resistance (Ω·cm²)]

The interface resistance (Ω·cm²) between the negative electrode mixture layer and the negative electrode current collector in each of the negative electrodes of Example and Comparative Examples 1 and 2 was measured using an electrode resistance measurement system RM2610 manufactured by HIOKI E.E. Corporation. The measurement principle of the interface resistance is based on JP 2016-27311 A. Table 1 collectively shows the results of the interface resistance between the negative electrode mixture layer and the negative electrode current collector in the negative electrodes of Example and Comparative Examples 1 and 2.

**[Table 1]**

| | Content of fumaric acid | | Interface resistance between negative electrode mixture layer and negative electrode current collector |
|---|---|---|---|
| | Upper half region C_{B} (mass%) | Lower half region C_{A} (mass%) | Ω·cm² |
| Example | 0.72 | 1.46 | 0.000983 |
| Comparative Example 1 | 0 | 0 | 0.001576 |
| Comparative Example 2 | 0.75 | 0 | 0.001745 |

### [Measurement of Binding Force (Adhesive Strength) between Particles of Negative Electrode Active Material]

Using a tacking tester TAC-II manufactured by RHESCA CO., LTD., the binding force (adhesive strength) between particles of the negative electrode active material in the negative electrode mixture layer in each of the negative electrodes of Example and Comparative Examples 1 and 3 was measured. Specific measurement conditions and the like are as follows. The prepared negative electrode was cut into a predetermined size (2 cm × 3 cm) to obtain a test sample. A double-sided tape #515 manufactured by Nitto Denko Corporation was bonded to the tip of a metal rod with a bonding area of 2 mmφ, pressed against the test sample at a preload of 400 gf for 10 seconds, and then peeled at a rate of 600 mm/min. Here, some of the negative electrode active material particles adhere to the tape surface, which is peeled between the negative electrode active material particles in the negative electrode mixture layer. The stress required for the peeling was defined as a binding force (adhesive strength) between the particles of the negative electrode active material in the negative electrode mixture layer. Table 2 collectively shows the results of the binding force (adhesive strength) between particles of the negative electrode active material in the negative electrode mixture layer in the negative electrodes of Example and Comparative Examples 1 and 3. However, in Table 2, the value of the binding force (adhesive strength) between the particles of the negative electrode active material in each of the other Example and Comparative Example 3 is shown as a relative value against the value of the binding force (adhesive strength) between the particles of the negative electrode active material in Comparative Example 1, which is set to a reference (100).

**[Table 2]**

| | Content of fumaric acid | | Binding force (adhesive strength) between particles of negative electrode active material |
|---|---|---|---|
| | Upper half region C_{B} (mass%) | Lower half region C_{A} (mass%) | |
| Example | 0.72 | 1.46 | 108 |
| Comparative Example 1 | 0 | 0 | 100 |
| Comparative Example 3 | 1.75 | 1.75 | 85 |

With respect to the negative electrode mixture layer, in Example where the content of the dicarboxylic acid component in the lower half region (C_{A}) and the content of the dicarboxylic acid component in the upper half region (C_{B}) satisfied the relationship of C_{A} > C_{B}, the interface resistance between the negative electrode mixture layer and the negative electrode current collector was lower than that in Comparative Example 1 with no carboxylic acid component, and the binding force (adhesive strength) between particles of the negative electrode active material in the negative electrode mixture layer was equivalent to that in Comparative Example 1. In Comparative Example 2 where the relationship of C_{A} < C_{B} was satisfied, the interface resistance between the negative electrode mixture layer and the negative electrode current collector did not decrease, and was equivalent to that in Comparative Example 1. In addition, in Comparative Example 3 where the dicarboxylic acid component was contained in both the lower half region and the upper half region, and the relationship of C_{A} = C_{B} was satisfied, the binding force (adhesive strength) between particles of the negative electrode active material in the negative electrode mixture layer was lower by 15% than that in Comparative Example 1.

### [Supplementary Notes]

(1) A negative electrode for secondary batteries, including a negative electrode current collector and a negative electrode mixture layer provided on the negative electrode current collector, in which
   the negative electrode mixture layer contains a negative electrode active material, and a dicarboxylic acid component containing at least one of a dicarboxylic acid and an anhydride thereof, and
   when the negative electrode mixture layer is divided in a thickness direction into two equal parts, one of which is a lower half region on a side of the negative electrode current collector and the other of which is an upper half region on a surface side, a content of the dicarboxylic acid component in the lower half region (C_{A}) and a content of the dicarboxylic acid component in the upper half region (C_{B}) satisfy a relationship of C_{A} > C_{B}.
(2) The negative electrode for secondary batteries according to (1), in which a ratio of the content of the dicarboxylic acid component in the upper half region (C_{B}) to the content of the dicarboxylic acid component in the lower half region (C_{A}) (C_{B}/C_{A}) is greater than or equal to 0 and less than or equal to 0.7.
(3) The negative electrode for secondary batteries according to (2), in which a ratio of the content of the dicarboxylic acid component in the upper half region (C_{B}) to the content of the dicarboxylic acid component in the lower half region (C_{A}) (C_{B}/C_{A}) is greater than or equal to 0 and less than or equal to 0.5.
(4) The negative electrode for secondary batteries according to any one of (1) to (3), in which the content of the dicarboxylic acid component in the lower half region (C_{A}) is greater than or equal to 0.1 mass% and less than or equal to 2 mass%.
(5) The negative electrode for secondary batteries according to any one of (1) to (4), in which the content of the dicarboxylic acid component in the lower half region (C_{A}) is greater than or equal to 0.4 mass% and less than or equal to 1.5 mass%.
(6) The negative electrode for secondary batteries according to any one of (1) to (5), in which the content of the dicarboxylic acid component in the upper half region (C_{B}) is greater than or equal to 0 mass% and less than or equal to 1.4 mass%.
(7) The negative electrode for secondary batteries according to any one of (1) to (6), in which the dicarboxylic acid is an unsaturated dicarboxylic acid.
(8) The negative electrode for secondary batteries according to any one of (1) to (7), in which the negative electrode active material contains a graphite material and a Si-containing material.
(9) The negative electrode for secondary batteries according to (7), in which the unsaturated dicarboxylic acid contains at least one of fumaric acid, mesaconic acid and methylenesuccinic acid.
(10) The negative electrode for secondary batteries according to any one of (1) to (9), in which the Si-containing material contains first composite particles having a carbon phase and silicon phases dispersed in the carbon phase, second composite particles having a silicate phase and silicon phases dispersed in the silicate phase, and/or third composite particles having a silicon oxide phase and silicon phases dispersed in the silicon oxide phase.
(11) The negative electrode for secondary batteries according to (10), in which the silicate phase of the second composite particle contains a lithium silicate phase represented by a formula: Li_{2z}SiO_{(2+z)} (0 < z < 2).
(12) A secondary battery including the negative electrode for secondary batteries according to any one of (1) to (11).

### REFERENCE SIGNS LIST

- 10: SECONDARY BATTERY
- 11: POSITIVE ELECTRODE
- 12: NEGATIVE ELECTRODE
- 13: SEPARATOR
- 14: ELECTRODE ASSEMBLY
- 15: BATTERY CASE
- 16: CASE BODY
- 17: SEALING ASSEMBLY
- 18, 19: INSULATING PLATE
- 20: POSITIVE ELECTRODE LEAD
- 21: NEGATIVE ELECTRODE LEAD
- 22: PROJECTING PORTION
- 23: FILTER
- 24: LOWER VENT MEMBER
- 25: INSULATING MEMBER
- 26: UPPER VENT MEMBER
- 27: CAP
- 28: GASKET
- 40: NEGATIVE ELECTRODE CURRENT COLLECTOR
- 42: NEGATIVE ELECTRODE MIXTURE LAYER
- 42a: LOWER HALF REGION
- 42b: UPPER HALF REGION

## Claims

1. A negative electrode for secondary batteries, comprising a negative electrode current collector and a negative electrode mixture layer provided on the negative electrode current collector, wherein
the negative electrode mixture layer contains a negative electrode active material, and a dicarboxylic acid component containing at least one of a dicarboxylic acid and an anhydride thereof, and
when the negative electrode mixture layer is divided in a thickness direction into two equal parts, one of which is a lower half region on a side of the negative electrode current collector and the other of which is an upper half region on a surface side, a content of the dicarboxylic acid component in the lower half region (C_{A}) and a content of the dicarboxylic acid component in the upper half region (C_{B}) satisfy a relationship of C_{A} > C_{B}.

2. The negative electrode for secondary batteries according to claim 1, wherein a ratio of the content of the dicarboxylic acid component in the upper half region (C_{B}) to the content of the dicarboxylic acid component in the lower half region (C_{A}) (C_{B}/C_{A}) is greater than or equal to 0 and less than or equal to 0.7.

3. The negative electrode for secondary batteries according to claim 2, wherein a ratio of the content of the dicarboxylic acid component in the upper half region (C_{B}) to the content of the dicarboxylic acid component in the lower half region (C_{A}) (C_{B}/C_{A}) is greater than or equal to 0 and less than or equal to 0.5.

4. The negative electrode for secondary batteries according to any one of claims 1 to 3, wherein the content of the dicarboxylic acid component in the lower half region (C_{A}) is greater than or equal to 0.1 mass% and less than or equal to 2 mass%.

5. The negative electrode for secondary batteries according to any one of claims 1 to 3, wherein the content of the dicarboxylic acid component in the lower half region (C_{A}) is greater than or equal to 0.4 mass% and less than or equal to 1.5 mass%.

6. The negative electrode for secondary batteries according to any one of claims 1 to 3, wherein the content of the dicarboxylic acid component in the upper half region (C_{B}) is greater than or equal to 0 mass% and less than or equal to 1.4 mass%.

7. The negative electrode for secondary batteries according to any one of claims 1 to 3, wherein the dicarboxylic acid is an unsaturated dicarboxylic acid.

8. The negative electrode for secondary batteries according to any one of claims 1 to 3, wherein the negative electrode active material contains a graphite material and a Si-containing material.

9. The negative electrode for secondary batteries according to claim 7, wherein the unsaturated dicarboxylic acid contains at least one of fumaric acid, mesaconic acid and methylenesuccinic acid.

10. The negative electrode for secondary batteries according to any one of claims 1 to 3, wherein the Si-containing material contains first composite particles having a carbon phase and silicon phases dispersed in the carbon phase, second composite particles having a silicate phase and silicon phases dispersed in the silicate phase, and/or third composite particles having a silicon oxide phase and silicon phases dispersed in the silicon oxide phase.

11. The negative electrode for secondary batteries according to claim 10, wherein the silicate phase of the second composite particle contains a lithium silicate phase represented by a formula: Li_{2z}SiO_{(2+z)} (0 < z < 2).

12. A secondary battery comprising the negative electrode for secondary batteries according to any one of claims 1 to 3.
